# EUROPEAN PATENT APPLICATION

(11) **EP 1 638 274 A1**
(43) Date of publication of application: **22.03.2006**
(21) Application number: 05108542.1
(22) Date of filing: 16.09.2005
(51) Int. Cl.: H04L 12/56, H04L 12/66

(54) **APPARATUS FOR INTERCONNECTING MULTIPLE DEVICES TO A SYNCHRONOUS DEVICE**

(30) Priority: 16.09.2004 US 610198
(71) Applicant: Interactic Holdings, LLC, Austin TX 78703 (US)
(72) Inventor: Reed, Coke, 78703, Austin (US); Murphy, David, 78735, Austin (US)
(74) Representative: Brunner, Michael John

(57) **Abstract**

An interconnect structure Is disclosed comprising a collection of input ports, a collection of output ports, and a switching element. Data enters the switching element only at specific data entry times. The interconnect structure includes a collection of synchronizing elements. Data in the form of packets enter the input ports in an asynchronous fashion. The data packets pass from the input ports to the synchronizing units. The data exits the synchronizing units and enters the switching element with each packet arriving at the switching element at a specific data entry time.

## Description

### RELATED PATENTS AND PATENT APPLICATIONS

The disclosed system and operating method are related to subject matter disclosed in the following patents and patent applications that are incorporated by reference herein in their entirety:
1. U.S. Patent No. 5,996,020 entitled, "A Multiple Level Minimum Logic Network", naming Coke S. Reed as inventor;
2. U.S. Patent No. 6,289,021 entitled, "A Scaleable Low Latency Switch for Usage in an Interconnect Structure", naming John Hesse as inventor;
3. U.S. Patent No. 6,754,207 entitled, "Multiple Path Wormhole Interconnect", naming John Hesse as inventor;
4. U.S. Patent No. 6,687,253 entitled. "Scalable Wonnhole-Routing Concentrator", naming John Hesse and Coke Reed as inventors;
5. United States patent application serial no. 09/693,603 entitled, "Scaleable Interconnect Structure for Parallel Computing and Parallel Memory Access", naming John Hesse and Coke Reed as inventors;
6. United States patent application serial no. 09/693,358 entitled, "Scalable Interconnect Structure Utilizing Quality-Of-Service Handling", naming Coke Reed and John Hesse as inventors;
7. United States patent application serial no. 09/692,073 entitled, "Scalable Method and Apparatus for Increasing Throughput in Multiple Level Minimum Logic Networks Using a Plurality of Control Lines", naming Coke Reed and John Hesse as inventors;
8. United States patent application serial no, 09/919,462 entitled, "Means and Apparatus for a Scaleable Congestion Free Switching System with Intelligent Control", naming John Hesse and Coke Reed as inventors;
9. United States patent application serial no. 10/123,382 entitied, "A Controlled Shared Memory Smart Switch System", naming Coke S. Reed and David Murphy as Inventors;
10. United States patent application serial no. 10/123,902 entitled. "Means and Apparatus for a Scaleable Congestion Free Switching System with intelligent Control 11", naming Coke Reed and David Murphy as inventors;
11. United States patent application serial no. 10/798,526 entitled. "Means and Apparatus for a Scalable Network for Use in Computing and Data Storage Management", naming Coke Reed and David Murphy as inventors;
12. United States patent application serial no 10/866,461 entitled, "Means and Apparatus for Scalable Distributed Parallel Access Memory Systems with Internet Routing Applications", naming Coke Reed and David Murphy as inventors;
13. United States patent application serial no. 10/515,937 entitled, "Means and Apparatus for a Self-Regulating Interconnect Structure", naming Coke Reed as inventor,
14. United States patent application serial no. 60/561,231 entitled, "Means and Apparatus for interconnecting Multiple Clusters of Devices", naming Coke Reed as inventor,
15. United States patent application serial no. 11/214,984 entitled, "Means and Apparatus for a Scaleable Congestion Free Switching System with Intelligent Control III" naming John Hesse, Coke Reed and David Murphy as inventors;
16. United States patent application serial no. 60/551,110 entitled, "Highly Parallel Switching Systems Utilizing Error Correction" naming Coke Reed and David Murphy as inventors;
17. United States patent application serial no. 11/074,406 entitled, "Highly Parallel Switching Systems Utilizing Error Correction II" naming Coke Reed and David Murphy as inventors;

### FIELD OF THE INVENTION

The present invention relates to a method and means of inserting a plurality of packets that are uncorrelated in time Into a set of synchronous receiving devices. An important application of the technology is to relax the timing considerations in systems that employ networks of the type described in incorporated patents No. 2, No. 3, No. 4, No. 5, No. 6, and No. 13 when inserting a plurality of packets into a wide variety of systems, including the systems described in incorporated patents No.8. No. 10, No. 11, No. 12, No. 14, No. 16, and No. 17, in one embodiment, there is no clock that communicates time to separate chips, nor is there timing information passing between chips.

### BACKGROUND OF THE INVENTION

Large computing and communication systems have logic and memory components which are spread across numerous subsystems and are located in a number of racks or cabinets. Devices on different chips, which may be located on multiple boards in these cabinets, may be required to run in parallel. Maintaining synchronous clocks across such systems becomes a challenge. The present invention relaxes the requirement that all subsystems be in synch. This relaxation Is extremely important in systems involving the Data Vortex™ switch, which simultaneously (i.e., at the same tick of its internal clock) accepts inputs into numerous ports from a wide range of devices that are each running on different clocks.

### SUMMARY OF THE INVENTION

The Data Vortex™ technology enables a large switching interconnect structure with hundreds of inputs and outputs to be placed on a single chip. The operation of the Data Vortex™ requires that message packets (perhaps from different sources) enter the switch at the same clock tick. This is because in the Data Vortex™ chip, there are only special message entry times (chip clock ticks) when the first bit of a data message packet is allowed to enter the Data Vortex™ data entry nodes,

A first aspect of the present invention is the design of an interconnect structure that connects an input port of a chip containing the Data Vortex™ switch to an input port of the Data Vortex™ switch residing on that chip. In the structure to be taught, the length of time that is required for a bit of a packet to travel from a chip input port to a Data Vortex™ subsystem input port is made variable in such a way that multiple packets arriving at the chip input port at different times arrive at the Data Vortex™ subsystem input only at special message entry times. Timing referred to in the previous sentence is with respect to the on-chip clock.

Many systems using Data Vortex™ technology (including the systems described in incorporated patents No.8, No.10, No.11, No.12, No.14, No.16, and No.17) contain a "stack" of Data Vortex™ switch chips that operate together in the sense that at a given input time, one chip in the stack receives a collection of packets P0, P1,..., PK and another chip in the stack receives a collection of packets Q0, Q1, ..., QK in such a way that for an integer J, with 0 < J < K, PJ and QJ have the same source, the same destination, and the same header.

A second aspect of the present invention relaxes the condition that PJ and QJ arrive at their respective switch chips at the same time to the condition that PJ and QJ arrive at the respective switch chips at "approximately" the same time. Since the switch chips may be placed on separate boards, this relaxation allows the entire system to be more robust and to be built in a more cost effective manner.

A third aspect of the present invention introduces the design and implementation of Network Interface Cards (NICs) for interfacing existing systems of devices, such as a parallel computer system, with a Data Vortex™ switching system.

### BRIEF DESCRIPTION OF THE DRAWINGS

Embodiments of the illustrative systems and associated techniques relating to both structure and method of operation may be best understood by referring to the following description and accompanying drawings.
FIGURE 1A is a schematic block diagram that illustrates an Internet Protocol router described in incorporated patents No.8, No.10, and No.12. This router utilizes uncontrolled switches 122, 124, 142, and 146 and a stack of controlled switches 126 that can all benefit from the technology of the present invention.
FIGURE 1B is a schematic block diagram that illustrates a parallel computing and data storage system described in Incorporated patents No.11, No,14, No.16, and No.17. This system utilizes uncontrolled switches 165 and controlled switches 185 that can all benefit from the technology of the present invention.
FIGURE 1C is a schematic block diagram that illustrates a self-controlled Data Vortex™ switch. The switch DS 186 receives data from the input logic units IL through a collection of synchronization units SU 184. The synchronization units SU are one aspect of the present invention,
FIGURE 1D is a schematic block diagram that illustrates an internet protocol router with no synchronization between the input-output devices 102 and the data-switch stack 130 and also with no synchronization between the controlled data chips 126 in the data-switch stack.
FIGURE 2A is a schematic block diagram that illustrates a group of devices 232 that send data to a Data Vortex™ switch 234 through synchronization units 230. These synchronization units represent a first aspect of the present invention.
FIGURE 2B is a block diagram Illustrating a synchronization unit positioned to receive data from an external source on line 226 and to send data to a node 220 in an upper-level Data Vortex™ node array NA 222.
FIGURE 2C illustrates a Data Vortex™ node array that is positioned to receive data from a plurality of synchronization units on lines 218, to receive data from other node arrays, and to send data to other Data Vortex™ node arrays.
FIGURE 2D is a block diagram illustrating a synchronization unit 230 positioned to receive a data packet from an external source on line 226 and to send that packet either to a node n1 in a first upper-level Data Vortex™ node array or to a node n2 in a second upper-level Data Vortex™ node array.
FIGURE 2E is a block diagram illustrating a set of FIFO buffers 244 in a synchronization unit 230 that is used to hold data packets that were sent to the Data Vortex™ switch by an input device that received a blocking control signal from the switch, but not in time to honor it.
FIGURE 3A is a schematic block diagram that illustrates the use of buffer units 302 used for sending groups of packets from a device 232 to synchronization units within controlled switch systems 228.
FIGURE 3B is a block diagram that illustrates a buffer unit BU 302 that is positioned to receive data from an external device 232 and to send data to a synchronization unit SU 230.
FIGURE 3C is a block diagram that illustrates a sub-buffer of a buffer unit.
FIGURE 4 is a block diagram illustrating a synchronization unit 230 that employs a plurality of FIFO buffer sets 410 used to synchronize the injection of incoming message packets into a node 220 in an upper-level Data Vortex™ node array NA 222.
FIGURE 5 is a block diagram illustrating the use of Network Interface Cards to connect existing systems of devices to a Data Vortex™ network.
FIGURE 6A is a block diagram that illustrates an efficient method of injecting data packets into a Data Vortex™ switch, even in cases when the I/O device and the Data Vortex™ operate at different clock speeds.
FIGURE 6B is a block diagram illustrating an alignment unit consisting of a plurality of shift registers connected in a tree structure.
FIGURE 6C is a block diagram illustrating a first shift register in an alignment unit and a second shift register for transferring data to the first shift register.
FIGURE 7 is a block diagram illustrating a shift register that can be used as a substitution for a number of incorporated shift registers including the shift register in an alignment unit illustrated in FIG. 6A and also in the Data Vortex™ FIFO.

### DETAILED DESCRIPTION

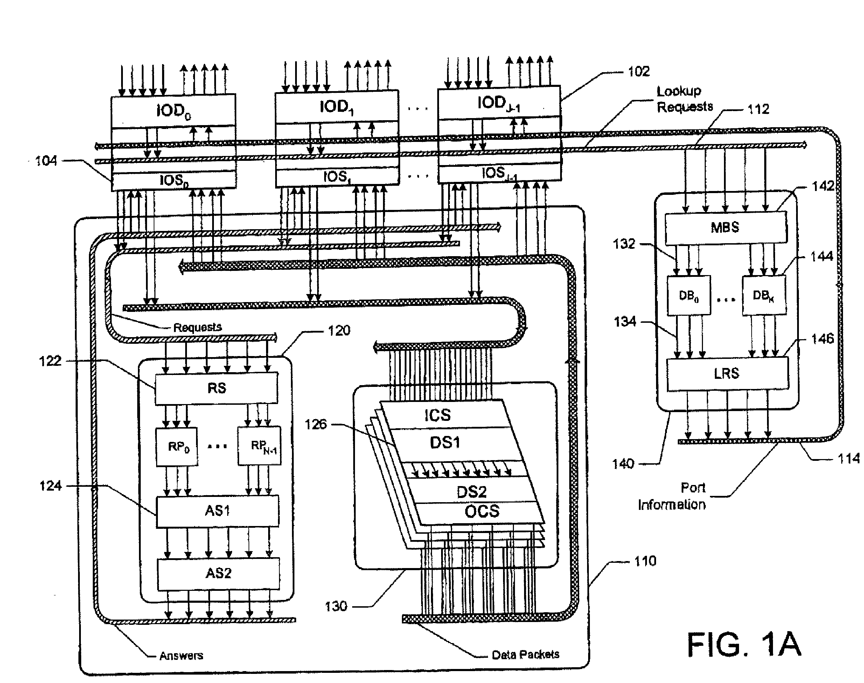

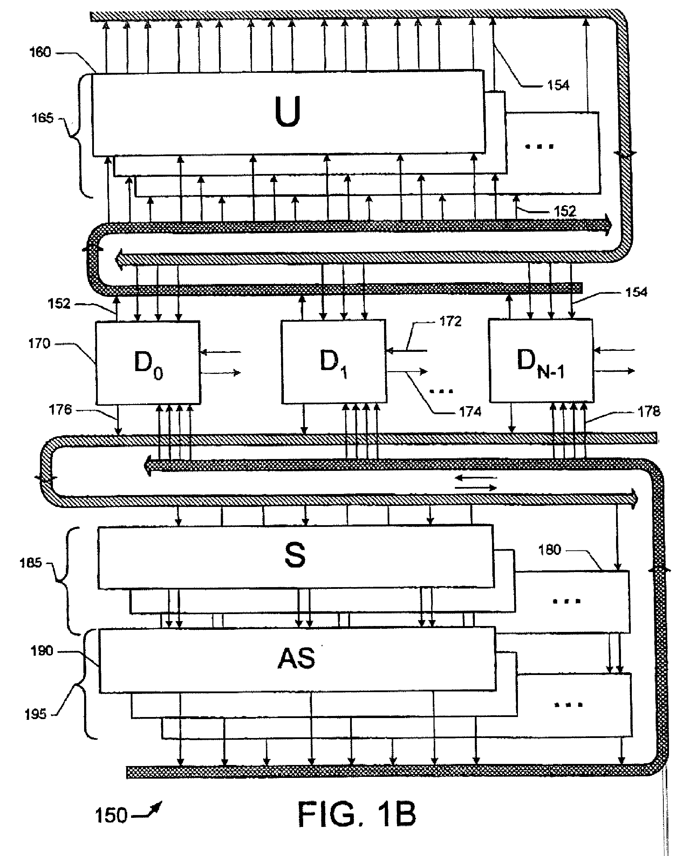

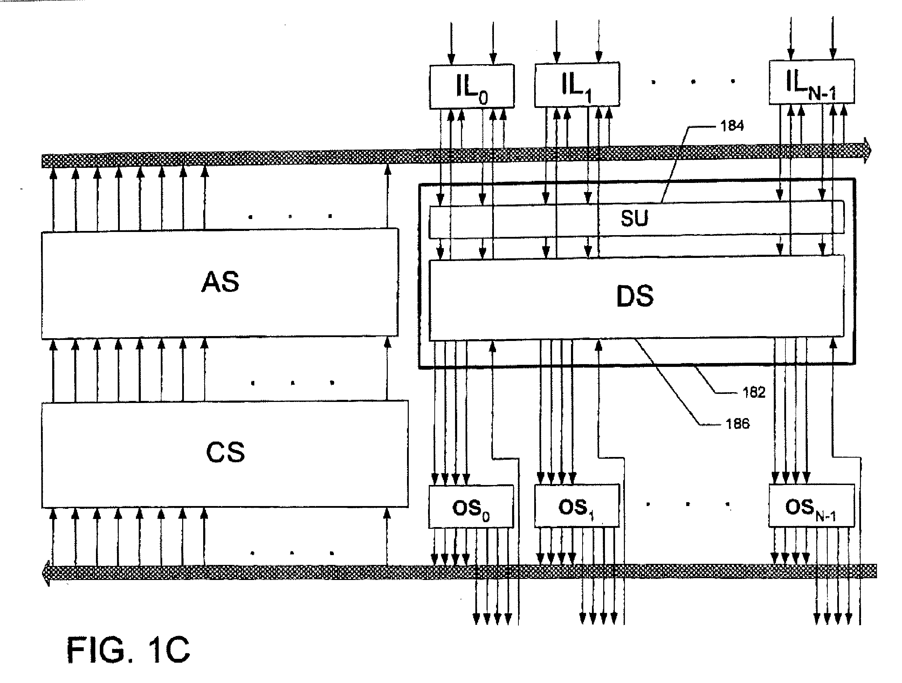

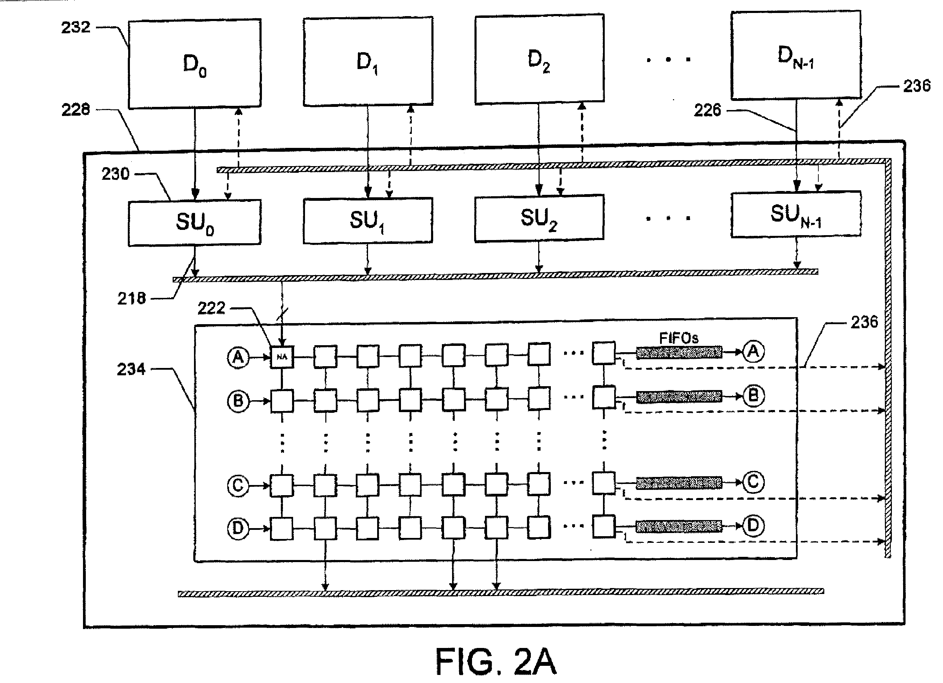

Refer to FIG. 2A illustrating devices 232 that send data to a node array 222 of a Data Vortex™ switch 234 through synchronization units 230. Devices 232 may be input output/devices 104 as illustrated in FIG. 1A or computing or data storage devices 170 as illustrated in FIG. 1B. The devices D0, D1, ..., DN-1 need not be synchronized with each other, and therefore, data packets arriving at synchronizing units SUO, SU1, ..., SUN-1 arrive at various times. The Data Vortex™ switch receives data packets of fixed length PL with the leading bit of each packet always set to one. There are fixed packet-receiving times, and thus, the Data Vortex™ node array 222 of the Data Vortex™ switch 234 must receive the first bit of data packets only at one of the packet receiving times. It is the function of the synchronization units to deliver the first bit of the data packets to the data receiving nodes of the Data Vortex™ switch at data packet receiving times. In a preferred embodiment, the synchronization units and the Data Vortex™ switch are on the same chip, and therefore, utilize the same chip dock. In the preferred embodiment, the number of synchronization units Is equal to the number of nodes in the receiving node array, and each synchronization unit is associated with one node of the receiving node array.

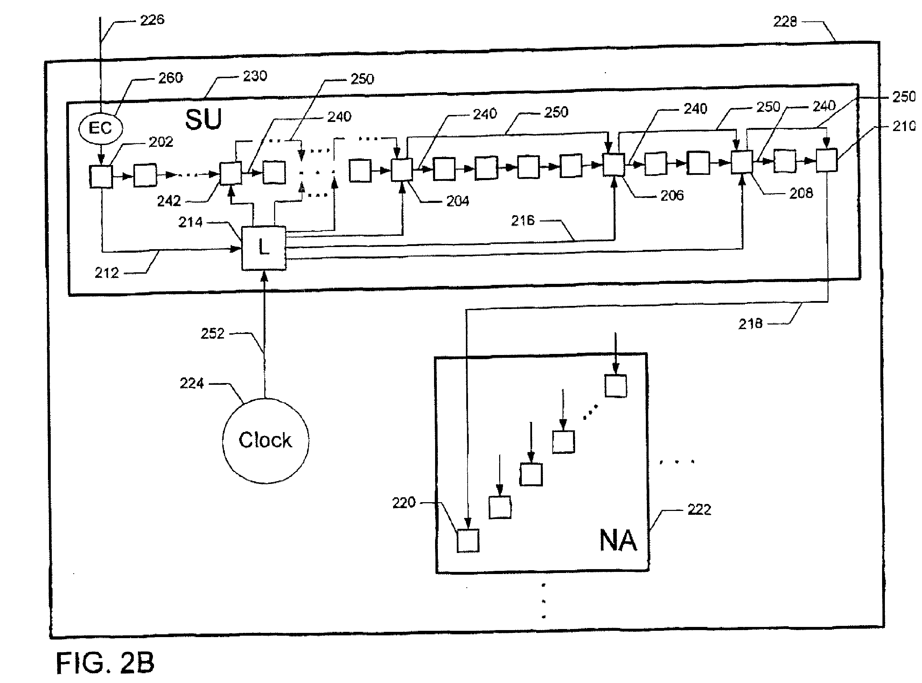

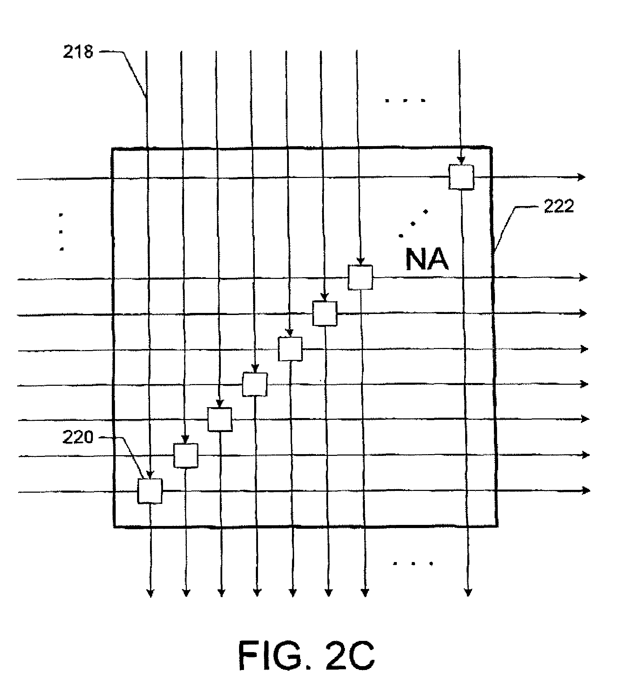

Refer to FIG. 2B that illustrates a synchronization unit SU 230, which receives data through an input line 226 and transmits data to a node 220 of a receiving node array NA 222 of a Data Vortex™ switch. FIG. 2C illustrates details of a node array with input and output lines from the nodes. The synchronization unit 230 is an important aspect of the current invention. Data packets sequentially enter the synchronization unit through line 226, are processed by an optional error correction unit EC 260, and then enter node 202. In a first embodiment, the error correction unit detects and corrects errors in the entire packet; in a second embodiment the error correction unit detects and corrects errors only in the Data Vortex™ output port address; in a third embodiment, there is no error correction unit. A re-sequencing unit in SU 230 is composed of one-bit delay units that together make up a shift register. Switches at select delay units (not shown) determine how many of the delay units a given message packet passes through- In this way, the number of delay units that a message packet bit passes through is variable, and hence, the amount of time spent In the shift register is variable. The first bit of a data packet (always set to one) enters delay unit 202. Responsive to the presence of this bit, a signal is sent to logic unit L 214 indicating that a new packet has entered the system. There is a minimum amount of time (clock ticks) that is required for a bit to pass through the variable-length shift register from the entry node 222 to the Data Vortex™ receiving node 220. This minimum time (minimum number of ticks), Tmin, is achieved when each of the switching elements of the shift register pass data through a bypass line 250 rather than pass through a straight-through line 240. The logic element L 214 is sent a clocking signal from the chip clock 224 via line 252 and uses this signal to calculate the number of ticks NT such that if a packet arriving at delay unit 202 passes through NT + Tmin shift register elements (one-bit delay units), then the first bit of the packet will arrive at node 220 at a proper data packet arrival time for the switch. The logic unit is able to send the data through the correct number of shift register elements by sending the proper signals to set the switching elements 204.

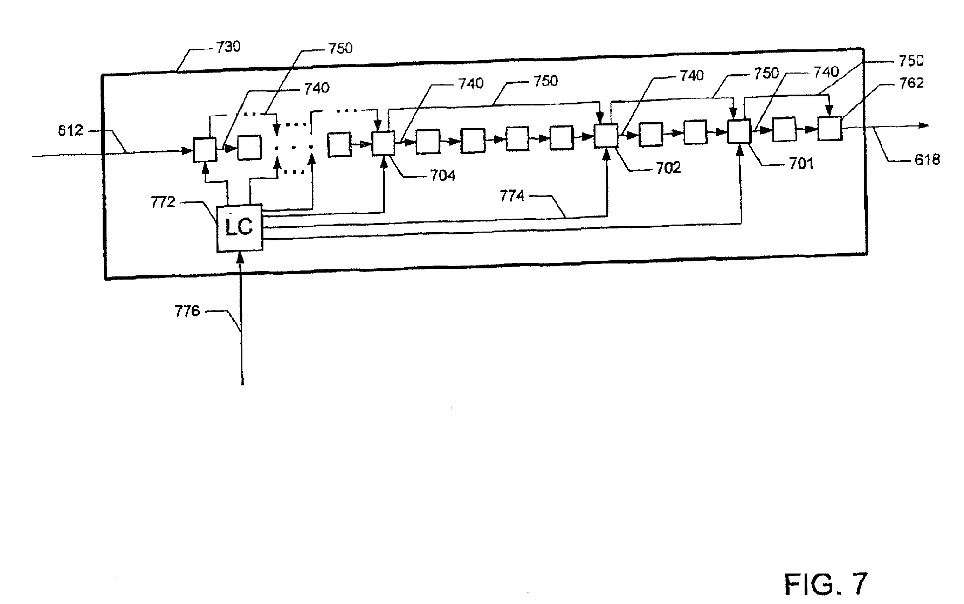

FIG. 7 illustrates a variable length FIFO that is similar in design to the synchronization unit SU 230 illustrated in FIG. 2B. The FIFO illustrated in FIG. 7 can also be employed advantageously as the FIFO delay units in a circular Data Vortex™ switch 234, as illustrated in FIG. 2A. By doing so, a chip containing one or more Data Vortex™ switches can be configured to support one of a plurality of packets sizes, which can be set as a design parameter for a particular device application.

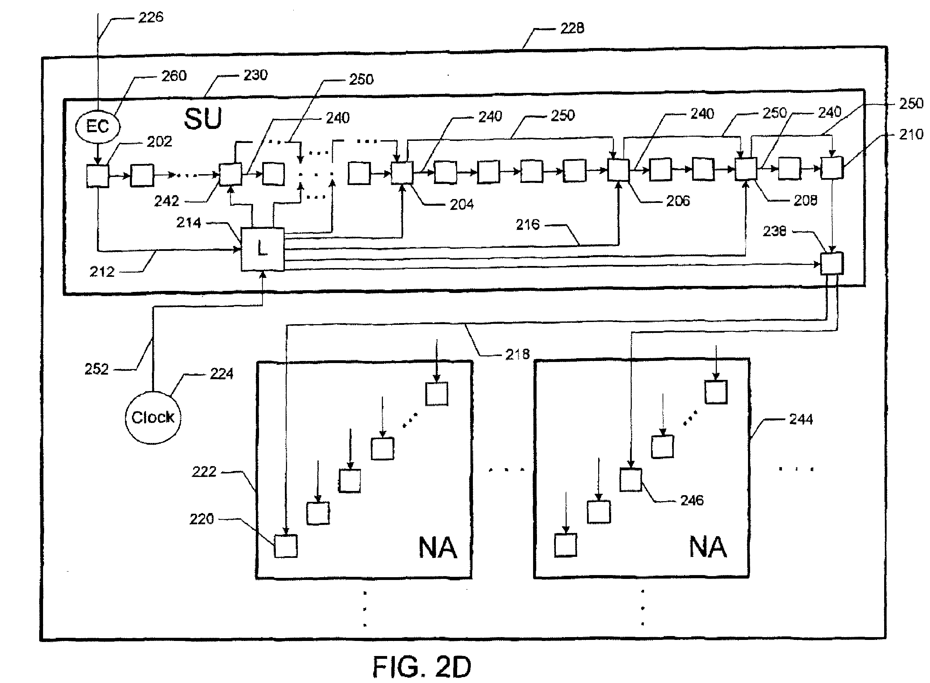

Refer to figure FIG. 2D, which illustrates a variation of the synchronization unit 230 depicted in FIG. 2A. The synchronization unit 230 in this new embodiment contains one additional binary switch 238 not in the embodiment of FIG. 2A. The purpose of switch 238 is to allow data packets entering the synchronization unit to be synchronized for entry into a circular Data Vortex™ switch at one of two data-receiving nodes, node 220 in node array 222 or node 246 in node array 244. For example, suppose that node 220 is the node at which a data packet is Injected at the beginning of a data-sending cycle and that node 246 is the node at which a data packet entering node 220 would progress to midway through the data-sending cycle, provided that the packet stayed on the entry-level ring of the Data Vortex™ switch. Then the logic element L 214 would examine two situations when a packet M arrives on line 226: 1) the packet M could be synchronized to enter node 220 at the beginning of the next data-sending cycle or 2) M could be synchronized to enter node 246 at the midpoint of either the current or the next data-sending cycle. Note that either method of injecting M into the Data Vortex™ switch would synchronize M within the switch. The logic L chooses the method that results in injecting M into the switch at the earliest clock time and sets the binary switch 238 accordingly.

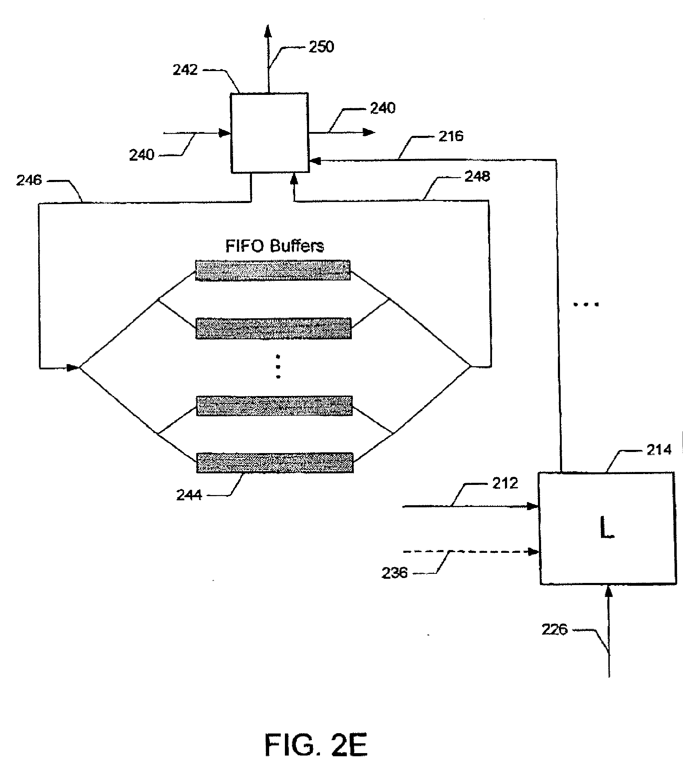

Refer to FIG. 2A, FIG. 2B, and FIG. 2E. The system illustrated by FIG. 2A and FIG. 2B assumes that If a control signal is sent on line 236 to a device DK to inform DK not to Inject a packet into the switch 228 during the next data-sending cycle, then DK will receive the control signal in time to prevent sending the next packet. However, if the device DK does not receive the control signal in time to honor it in the next sending cycle (e.g., due to a high system clock speed or the distance of DK from the switch), DK may send one or more packets into switch 228 before receiving the control signal request. FiG. 2E illustrates the addition of FIFO buffers 244 to each of the synchronization units 230 of FIG. 2B that are used to hold packets sent by a device 232 when a control signal on line 236 indicates that a packet cannot immediately enter the switch. When the Data Vortex™ switch 234 sends a control signal on line 236 to a device DK, a copy of this signal is also sent to logic unit L 214 of the corresponding synchronization unit SUK. Thus, if DK sends one or more packets to SUK before receiving a control signal, DK and L can use counters VK and VL respectively to keep track of how many such packets have been sent. When L detects the arrival of a packet on line 212 that can not be immediately inserted into the node array 222, it increments VL by one and instructs node 242 via line 216 to store that packet in one of the FIFO buffers 244. Device DK also increments VK by one each time it determines that it has sent a packet during a sending cycle in which the control signal on line 236 was active.

For each packet sent by DK while the control signal is active, DK refrains from sending a packet at a future packet injection time and then decrements VK by one. Knowing the scheme used by DK, the logic unit L uses a released injection time to instruct node 242 to inject the oldest packet in the FIFO buffers into the switch and then decrements VL by one. In this way, the buffers 244 are never overloaded. By using this scheme, a packet sent by a device while the control signal is active is processed by the switch during the same cycle that it would have been if device DK had received the control signal in time to delay sending the packet, i.e., the packet is buffered in the synchronization unit instead of in the device DK. In other embodiments, the data can be injected either at the leftmost insertion point or at another insertion point distinct from the midway point.

There are two types of shift register nodes in the synchronization unit the first type is an active node that has two output ports, e.g., nodes 242, 204, 206. and 208; and the second type is a passive node that contains only one output port. The logic unit L sends signals through lines 216 to set the active nodes to switch to straight-through lines 240 or to switch to bypass lines 250. The active nodes maintain the same setting until the entire packet has passed through. The logic unit sets the active nodes in such a way that the first bit of an entering data packet arrives at node 220 at a data packet insert time. The logic unit L requires a number of ticks ("think time") to calculate the value of NT. There are a sufficient number of shift register elements between node 202 and node 242 for the logic L to make the necessary calculation and to set the active elements of the shift register.

There are x active node elements labeled Ex-1, Ex-2, ..., E2, E1, E0. In FIG. 2B, node 242 is Ex-1, node 204 is E2, node 206 is node E1, and node 208 is node E0. There are 2J-1 passive elements between active elements EJ and EJ-1. The integer J is chosen so that (2J-1) > PL. The calculation to set the active elements is based on the binary representation of NT. Given that the binary representation of NT is of the form bx-1, bx-2, ..., b2, b1, b0, then an active node EJ is set to send the data packet through a bypass line 250 if bJ = 0 and via a straight-through line 240 if bJ =1. For example, node E0 208 is set to send the packet through a bypass line 250 if b0 = 0 and via e straight-through line 240 if b0 = 1; node E1 206 is set to send the packet through a bypass line 250 if b1 = 0 and via a straight-through line 240 if b1 = 1; node E2 208 is set to send the data through a bypass line 250 if b2 =0 and via a straight through line 240 if b2 = 1; and finally node Ex-1 242 is set to send the data through a bypass line 250 if bx-1 = 0 and via a straight through line 240 if bx-1 = 1. In this manner, the data is sent through {(2x-1)·(bx-1) + (2X-2)·(bx-2) + ... + (22)·b2 + (21)·b1 + (20)·b0} = NT passive nodes lying between the node 242 and the node 210.

### I. A System with a Global Clock

The synchronizing previously described in this disclosure is performed on the chip that contains the Data Vortex™ and is an on-chip synchronization that guarantees that the first bit of a packet or packet segment enters the Data Vortex™ at the correct packet entry time. In the systems treated in this section, there is also synchronization between multiple chips that Is enforced by a global clock. This clock assures that data-switch chips in a stack of data-switch chips (FIG. 1A 130 and FIG. 1B 185) are nearly in synch, and thus, packets segments entering such a stack are nearly in synch. This synchronization enables the scheduling of packets at given packet insertion times. An important aspect of the present invention is that the global system synchronization need not be as accurate as the on chip synchronization.

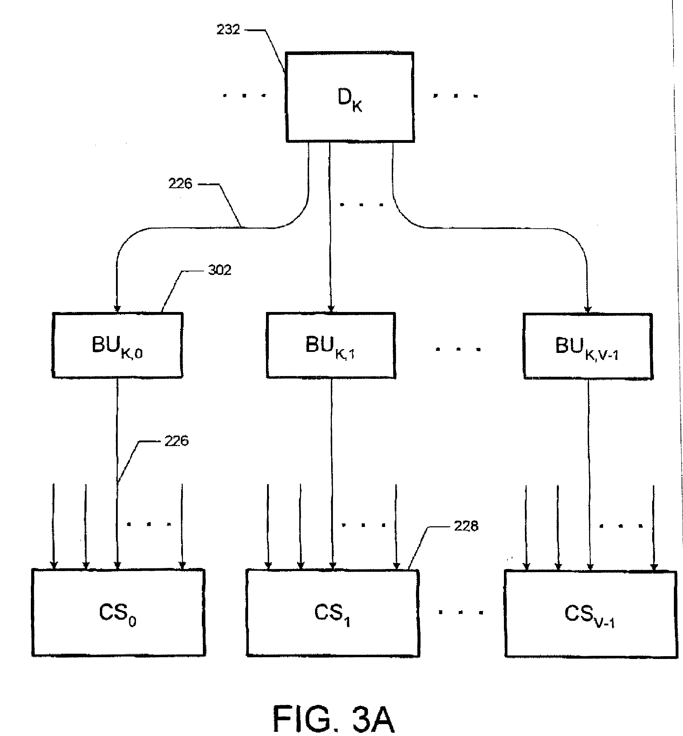

Refer to FIG. 1A that illustrates input/output devices 102 that send data through a plurality of data switches 126 and FIG. 18 that illustrates computational and data storage devices DK 170 that send data through a stack of data switches 185. Data in the form of messages are placed into a plurality of packets P0, P1, ... , PU, and each packet PJ is decomposed into a number of packet segments PSJ,0 PSJ,1, ... , PSJ,V-1. The packet segments may also contain error correction bits. The packet segments are sent in parallel through V controlled data switches CS0. CS1, ..., CSV-1 (illustrated in FIG. 3A). The packet segments PSJ,0, PSJ,1, ... , PSJ,V-1 belong to sending group J, with PSJ,M passing through CSM,

Refer to FIG. 3A indicating a device DK connected to the V buffer units BUK,0, BUK,1, ... , BUK.V-1. DK sends the packet segments PSJ,0, PSJ,1, ... , PSJ,V-1 at the same time, with PSJ,M being sent to buffer BUK,M. BUK,M subsequently forwards the packet segment PSJ,M to controlled switch CSM. CSM also receives packet segments from devices D0 D1,..., DK-1 and from devices DK+1. DK+2, ..., DV-1. Because the device DK may be far removed from the buffers BUK,0. BUK,1, ... , BUK,V-1, data packet segments that are sent simultaneously to buffers may not arrive at the buffers at exactly the same time. Moreover, packets sent simultaneously to a given controlled switch may not arrive at the controlled switch exactly at the same time. However, in systems that use scheduled injection times, it is important for the proper operation of the controlled switch that packets from different devices that are scheduled to go through the controlled switch simultaneously do in fact enter the switch node array at the same time. One aspect of the present invention is to guarantee that all of the packets scheduled to go through the controlled switches in the same group are guaranteed to go through the controlled switches together, even though their arrival at the switching system may be slightly skewed in time.

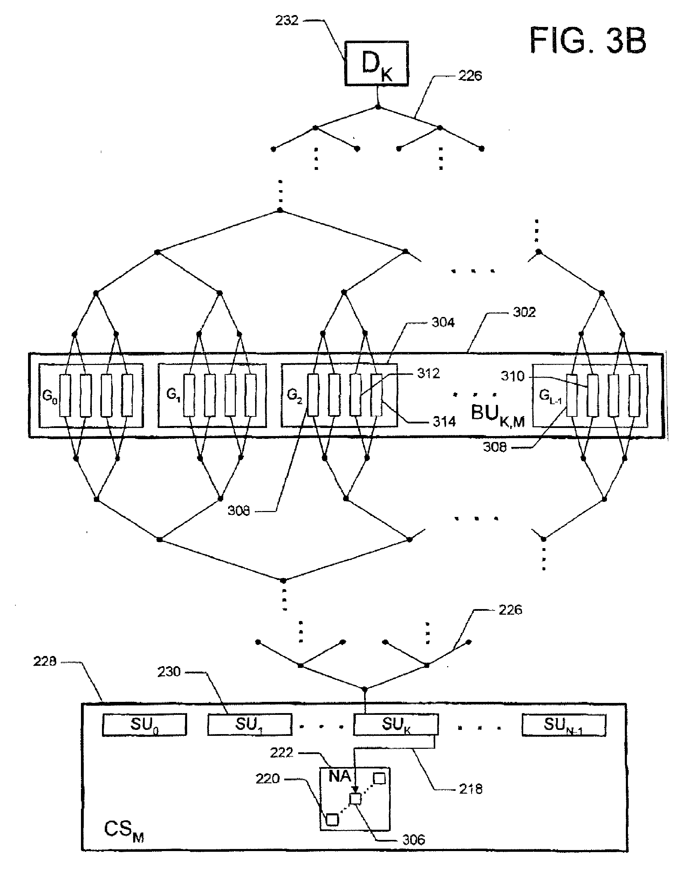

Refer to FIG. 3B illustrating the data paths from DK to the controlled switch CSM. The devices D0, D1, ... , DN-1 schedule data to go through the V controlled switches. In each approximate message arrival time J, a plurality of devices target message packet segments to arrive at the stack of controlled switches. The message packet segments that are scheduled to arrive at the controlled switches at approximate arrival time J are referred to as message packet segments in group J. Referring again to FIG. 3B, the device DK sends a group J of packet segments destined for CSM through interconnects 226 in a tree structure to BUK,M sub-buffer GJ. The sub-buffer GJ is further divided into smaller buffers. In FIG. 3B, GJ is subdivided into four buffers 308, 310, 312, and 314. In other embodiments GJ may be divided into more than four or less than four buffers. Sub-buffer 308 Is first filled, then sub-buffer 310, followed by sub-buffer 312. and finally by sub-buffer 314.

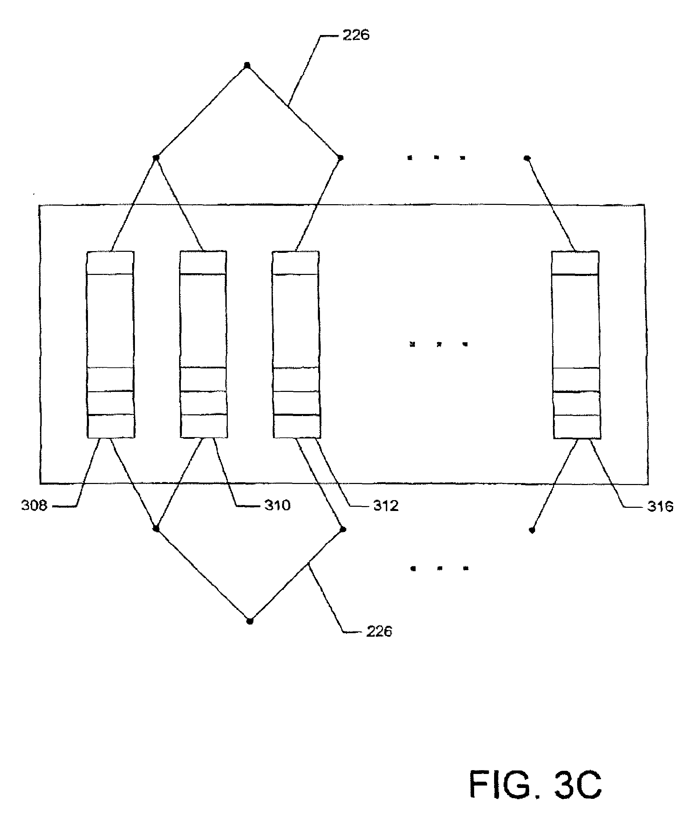

Refer to FIG. 3C in which the GJ is subdivided into S sub-buffers labeled SB0, SB1, ... , SBS-1. The sub-buffers are filled in order by filling SB0 308, then SB1 310, the SB2 312, and so forth, so that SBS-1 316 is filled last. When the group J packet segments are sent from GJ to CSM, the data is sent In the order received, with data in SB0 sent first, followed by the data in SB1, and so forth, until the data in SBS-1 is sent.

The Data Vortex™ switch on chip CSM must receive all of the group J packet segments at the same time. There is a time interval [a,b] such that packet segments arriving at the synchronization units in the time interval [a,b] will be aligned to enter the Data Vortex™ switch at group J insertion time. There are positive numbers ε and δ such that if CSM requests the data from GJ at time t, then the data from GJ arrives at the synchronization unit SUK in the time interval [t+δ-ε, t+δ+ε]. The design parameters are such that the interval [a,b] is longer than the Interval [t+δ-ε, t+δ+ε]. Corresponding to message packet insertion event J, each of the switches in the stack of control stack requests data at the proper time to arrive at approximately time t = (a+b)/2 so that the interval [t+δ-ε, t+δ+ε] is a subset of the interval [a,b], and therefore all of the group J sub-packets arrive at the input ports of the switch at the same tick of the dock that controls the switch.

In systems such as the systems described in incorporated patents No.8, No.10, No.11, No.12, No.14, No.16, and No.17 each of the controlled switches CS0, CS1, ..., CSV-1 sends data to a group of targets. If T is a target device of the stack of switches, then each of the switches in the stack of switches CS0, CS1, ..., CSV-1 sends data to T. At a data sub-packet sending time, a target T may receive data from each of the switches in the stack. Since the switches in the stack need not be perfectly synchronized, the data arriving at T from one of the switches in the stack may arrive at a slightly different time than another switch in the stack. For this reason, in a first embodiment, there is a time gap between the end of one sub-packet sending time and the beginning of a second sub-packet sending time so that when packets arrive in overlapping time intervals, they are sub-packets of the same packet. In a second embodiment, each of the packets in a group J contains the integer J in their header so that the sub-packets can be correctly reassembled into a packet.

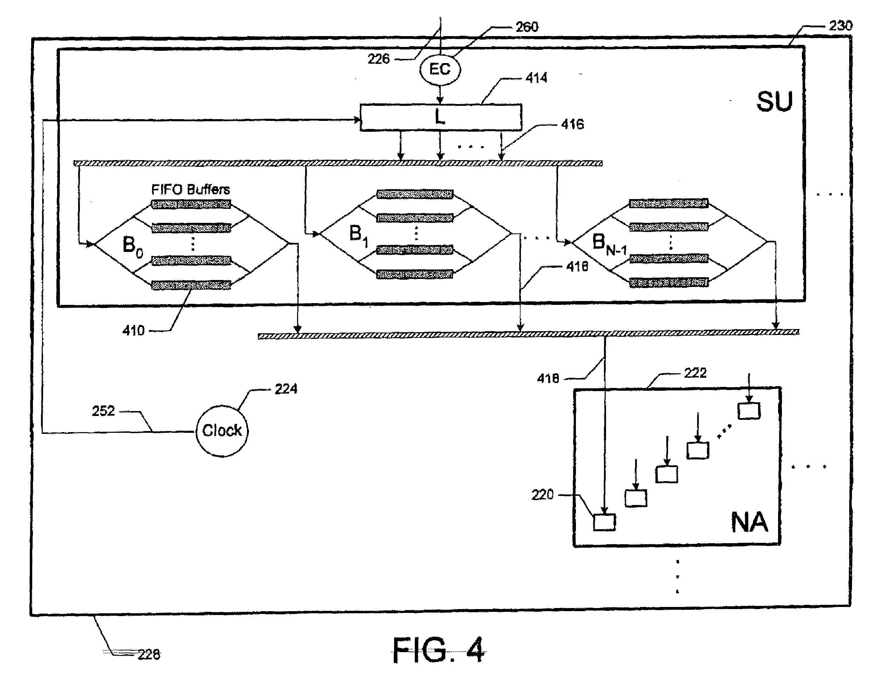

Refer to FIG. 4 which Illustrates an alternate embodiment of a synchronization unit that employs FIFO buffers instead of delay units. As illustrated in FIG. 4, each synchronization unit SU 230 contains N buffers B0, B1, ..., BN-1, where N is a system design parameter. Each FIFO buffer BK holds one message packet and consists of a plurality of sub-buffers. For illustration purposes, four sub-buffers are shown. A message packet M enters the synchronization unit SU 230 via line 226 and is (in some embodiments) processed by an error correction unit EC 260 before entering logic unit L 414. L decides in which buffer to Insert M and when to inject the packet in each buffer into the Data Vortex™ switch via line 418 and node 220 of node array 222.

Each synchronization unit SU 230 in the system 228 inserts message packets into the Data Vortex™ switch in a round-robin fashion from its set of FIFO buffers in the order B0, B1, ..., BN-1, with the timing of the insertions controlled by the system clock 224. Message packets are inserted into the FIFO buffers in the order B0, B1, ..., BN-1 in the following manner. If logic L receives a message packet M In the data-sending interval used for inserting a packet into the switch from the buffer B0, then M is inserted into BN-1. In general, a message packet received during the interval in which the packets in the buffers BK are inserted into the switch is placed into FIFO buffer BK-1. Note that if no packet is received by L during the interval reserved for sending packets from the set of buffers BK into the switch, then BK-1 will be empty. i.e., the first bit of the first sub-buffer is 0. This scheme is used to ensure that all of the packets inserted into the system 228 by the set of devices D 232 during a given insertion interval are inserted as a group into the Data Vortex™ switch. Note that since each FIFO buffer Is divided into a plurality of sub-buffers. A single packet is divided into a plurality of sub-packets. A single packet fits in a FIFO buffer with each sub-packet fitting into a sub-buffer. Thus, the part of the packet contained in the first sub-buffer can advantageously be injected into the switch in advance of the other sub-buffers being filled with incoming data.

The technology in the present patent can be conveniently incorporated into a number of systems, including systems containing Data Vortex™ switches. FIG. 1C illustrates a method of incorporating the technology of the present patent with the technology of incorporated patent No. 13. The devices illustrated in FIG. 1C, can be used in a number of systems including the systems described in incorporated patents No.8, No.10, No.11, No.12, No.14, No.16, and No.17.

### II, A System with No Global Clock

Systems of this class use synchronization at the chip level, but there is no synchronization between chips. These systems have no global clock. An important difference between these systems and the systems with global clocks is that there are no scheduled packet-sending times. The sequential order of packet sending and packet arrival is, however, controlled. In these systems, there is no synchronization between the chips in stack 130 of FIG. 1A, nor is there synchronization between the chips in stack 185 of FIG. 1B.

Refer to FIG. 1B illustrating a computing system. Consider the case in which a device DR wishes to receive a long message M consisting of a plurality of packets from a device DS. There is an integer NM such that the device DR can only receive NM messages from the controlled switch stack S 185 through lines 178 at a given time. Device DR is not allowed to have more than NM outstanding requests for data to pass through S. As soon as DR has an available data path DP 178 to receive message M, device DR sends a request packet RP to DS through the uncontrolled switch U. RP requests that message M be sent through device DR input data path DP. The message M is sent by sending device DS to receiving device DR in NP packets, P0, P1, ..., PNP-1, with each packet PK consisting of V segments SGK,0, SGK,1, ... , SGK,V-1. In an embodiment wherein each device contains NM input data paths, the switch stack S contains (NM·V) switches. SW0,0, SW0,1, ..., SW0,V-1 carry the data In data path zero; SW1,0, SW1.1, ..., SW1,V-1 carry the data in data path one; and so forth, so that SWNM-1,0, SWNM-1,1, ..., SWNM-1.V-1 carry the data in data path NM-t. The packet PK is sent through the switch stack S with segment SGK,L being sent through switch SWDP,L of S. Each of the segments has a header with leading bit set to one to indicate the presence of data which is followed by the binary representation of R (the address of DR) and an identifier for the input data path DP 178 used by DR to receive the message. The header may also contain other information possibly including, a second copy of the target address R, error correction bits, the number of packets in the message, a message identifier, and other Information deemed useful. In response to receiving the request packet RP, device DS sends M as soon as Ds has a free message sending line 176. Device DS sends the packets through the switch stack 185. Each packet segment header contains the binary address of R and also an identifier indicating the input data path DP.

An important aspect of the system with no global clock is that the controlled switches are not in synch. It is possible for a segment of packet K to pass through a switch of stack S at the same time as a segment of packet K+1 passes through a different switch of stack S. Therefore, the segments need to be aligned in order to reassemble the packet PK of the message M. This realignment is not difficutt and is accomplished by assembling the packets on Input data path DP into V bins. While the segments of a given data packet PK will arrive in sequential order, there may be time gaps between two consecutive segments arriving at a given bin. When the Lth segment SG0,L of the packet P0 arrives at bin BINDP,L, it is placed in BINDP,L location 0. When the Lth segment SG1,L of packet P1 arrives at bin BINDP,L, it is placed in BINDP,L location 1. This process continues until the Lth segment SGNP-1,L of packet PNP-1 arrives at bin BINDP,L, and is placed in BINDP,L location NP-1.

Given that the minimum time for a request packet to travel from one device to another is T1 and the minimum time for the first bit of a scheduled packet to travel from one device to another is T2, then T3 = T1 + T2 is the minimum time that the first bit of a packet can arrive at DR after DR initiates a request for it. Thus, DR can safely request that another packet be sent to input path IP while it is currently receiving data on DP, provided that the time required to receive the remaining current packet on DP is less than T3. DR advantageously uses this timing process to maximize the use of its input paths when it has additional data requests in its backlog.

Consider the case where device DS wishes to send a message M consisting of NP packets through the controlled switch stack to device DR. In order to accomplish this task, device DS sends a request to DR for device DR to request the message NP packets. When device DR has an available input data path DP 178, DR will request M to be sent through a message path DP. The procedure is then carried out as described in the preceding paragraph.

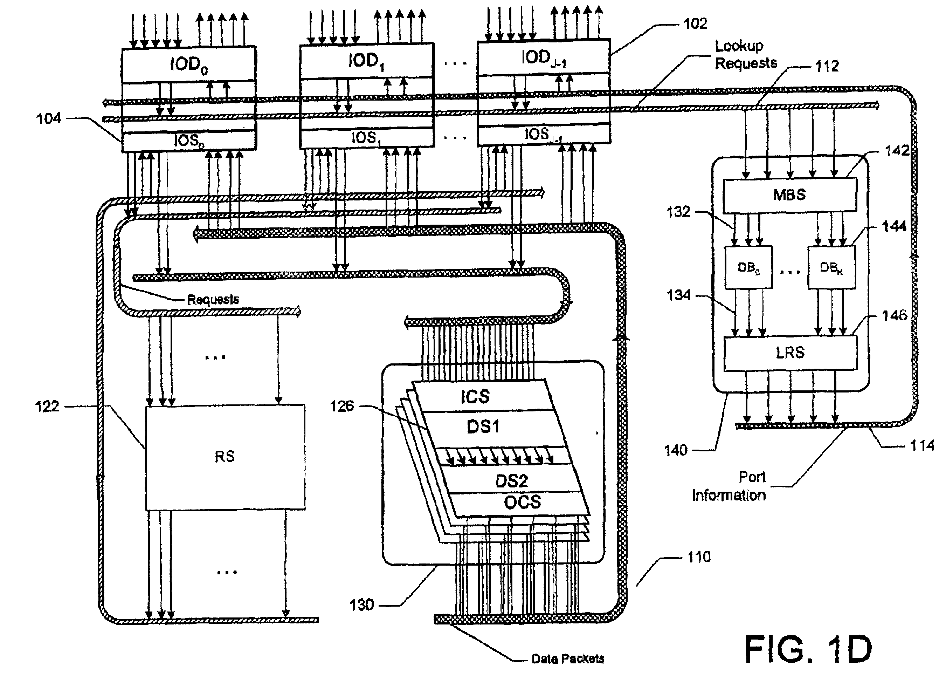

Refer to FIG. 1D illustrating a communication system where there is no synchronization between the chips in the data-switch stack 130 and there is no scheduled time for messages to be sent through the data-switch stack. When a message M in the form of a sequence of packets arrives at the system at an input-output device IODS and the target for M is the input-output device IODR, then IODS sends a request-to-send packet to IODR. The request-to-send packet contains message packet information which may include the length of the packet, the priority of the packet, the location R of the receiving input-output device, a packet identifier, and possibly other useful information. IODR has a logic (not shown) that stores all of the request to send packets that it has received from various input-output devices. When IODR has a free input line from data-switch stack 130 to receive a packet then (based on an algorithm that considers a number of factors including when the message was received and the priority of the message) IODR requests that IODS send the packet through a free input data path DP.

### NETWORK INTERFACE CARDS

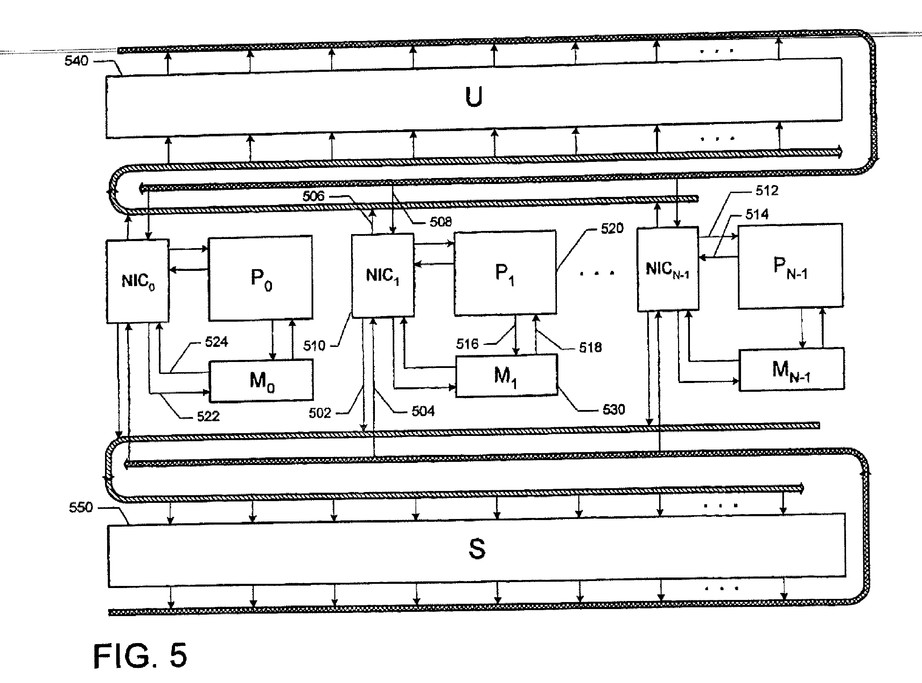

Refer to FIG. 5 which illustrates a collection of devices, illustrated as computing devices, each consisting of a processor PK 520 and its associated memory MK 530. The processors are interconnected by Network interface Cards (NICs) 510 and communicate asynchronously with each other via a Data Vortex™ network consisting of an unscheduled Data Vortex switch U 540 and a scheduled Data Vortex switch 550. It is the responsibility of the NICs to coordinate this communication in a manner that is transparent to the computing devices.

A processor PJ makes a request for data from another processor PK by sending the request packet via line 514 to its associated NICJ 510. PJ may also specify where to store the data in its memory MJ 530. NICJ then converts the request into the proper formal and sends it to NICK via line 506, the unscheduled Data Vortex™ switch 540, and the line 508.

In a first embodiment, a Data Vortex™ system of the type In which scheduling of data packets is used, each NIC keeps track of the status of its associated processor and, thus, knows the availability of its 1/0 lines, memory, and time-slots. In this manner, NICK can negotiate independently with NICJ to select the time-slot and path for satisfying the request. Prior to the selected time, NICK may receive and store the requested data from PK. At the selected time, NICK sends the requested data to NICJ via line 502, the scheduled Data Vortex™ switch 550, and line 504. Upon receiving the data, NICJ sends it to MJ via lines 512 and 516 at a time independently prearranged with PJ; this may or may not require first buffering the data in NICJ. Alternately, NICJ may send data directly to processor memory MJ via line 522 as illustrated in FIG. 5.

In a second embodiment, a Data Vortex™ system of the type in which scheduling of data packets is not used, time-slot scheduling is not employed, and negotiation between NICJ and NICK does not occur. Instead, NICJ sends a request packet to NICK via line 506, the unscheduled Data Vortex™ switch 540, and line 508 requesting that the data be sent as soon as possible. The request packet also specifies an input line 504 to NICJ that will be reserved for the requested data until it is received or a time-out value is exceeded. NICK receives the request, prioritizes it with other requests, and sends the data to NICJ as soon as possible via line 502, the scheduled Data Vortex™ switch 550, and specified line 504, unless the agreed upon time-out value has been exceeded. As before, NICJ sends the data to MJ, at a time independently prearranged with PJ, either directly via line 522 or indirectly via lines 512 and 516.

### AN ALTERNATIVE EMBODIMENT THAT ALLOWS A DATA VORTEX™ TO RUN AT A DIFFERENT SPEED THAN THE CHIP PORT SPEEDS

The embodiment described in this section applies to chips containing a circular Data Vortex™ network as well as to chips containing stair-step Data Vortex™ network. This embodiment applies to chips where the injection rate into the chip is equal to the injection rate into a Data Vortex™ input port as well as to chips where the injection rate Into an import of the chip is not equal to the injection rate into a Data Vortex™ input port. The embodiment is useful in systems where there is a time delay which allows additional packets to be sent to a network chip after the chip sends a control message to a source requesting that the source temporarily suspend transmission to the network chip.

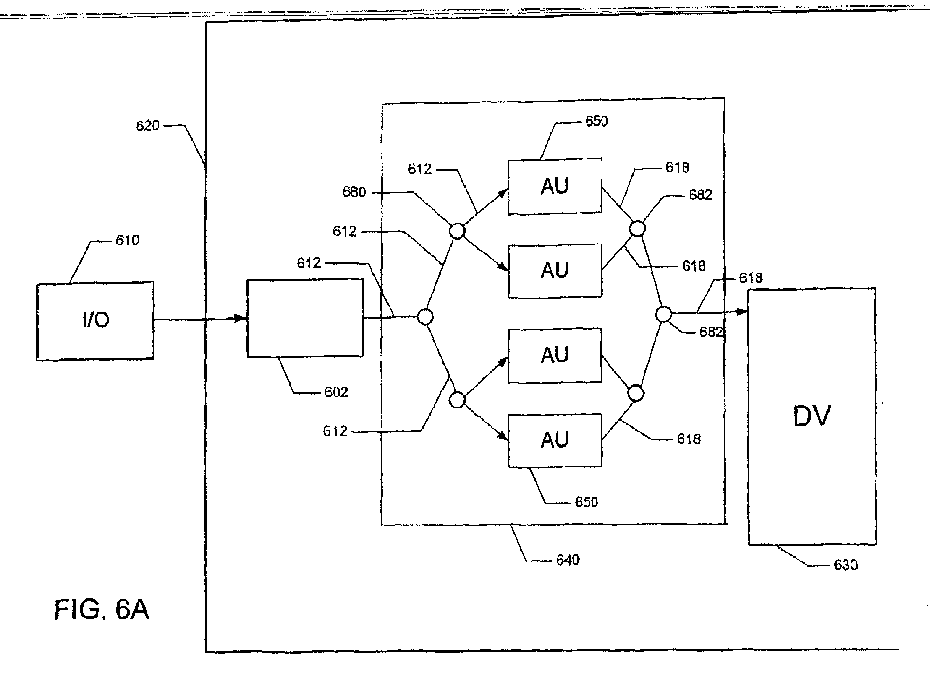

Refer to FIG. 6A Illustrating a communication chip 620 containing a Data Vortex™ switching core 630. There are multiple I/O devices 610 that are positioned to send data to the communication chip 620. One such I/O device 610 is Illustrated in FIG. 6A. Also illustrated in FIG. 6A is a data shaping module 602 used in some embodiments that receives data from an Input port and passes that data onto other chip components. The module 602 may be a serialization-deserialization (serdes) module. Data Is transported from the data shaping module via line 612 to a data timing and storage module 640 that contains a plurality of data alignment units 650. Data passes from the data shaping unit 602 to the data alignment units 650 through a tree with edges 612 and switch vertices 680. In one simple embodiment, the vertices switch in such a fashion that data packets are sent to the alignment units in a round robin fashion. A data packet passes from one of the alignment units 650 to one of the input ports of a Data Vortex™ switch module through another tree with edges 618 and switching nodes 680. In a simple example, data is transferred from the alignment units to the Data Vortex™ in a round robin fashion. In some embodiments, the data rate through line 612 is not equal to the data rate through line 618. Multiple alignment units 650 are employed in order to buffer any additional packets sent to the communication chip 620 after the chip has used a control signal to inform an input source that additional packets should not be sent until the control signal is turned off.

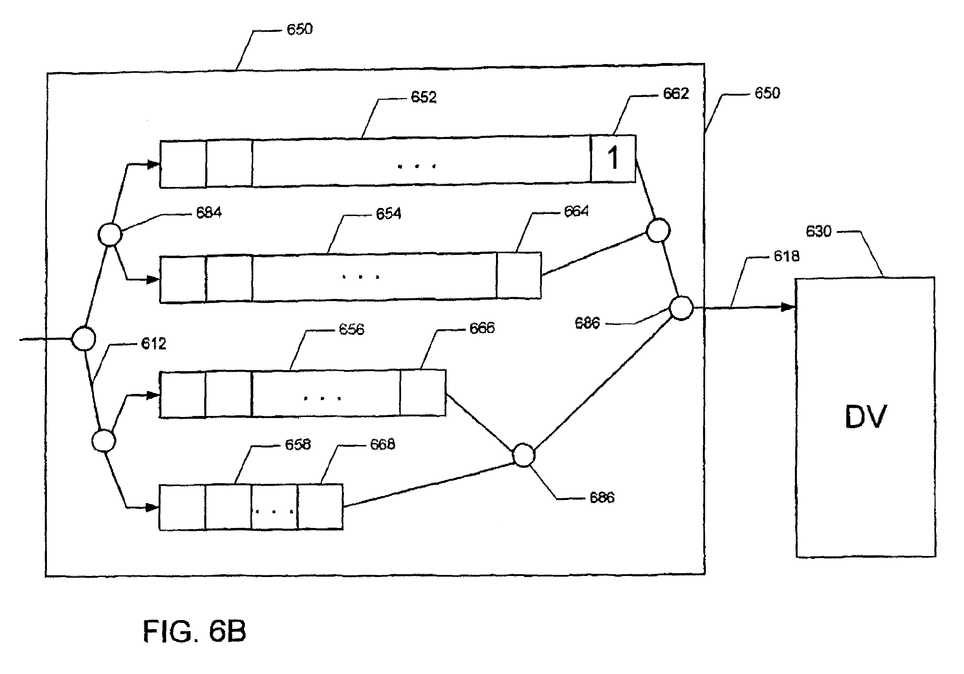

Refer to FIG. 6B that is suitable for use in systems where the data rate though line 618 is synchronized to the data rate through the Data Vortex™ module and the data rate in line 612 is synchronized to the data rate out of the data shaping unit. In one important application, the data rate through a line 618 exceeds the data rate through a line 612. FIG. 6B illustrates an alignment unit 650. An alignment unit 650 consists of a number of shift registers connected in a tree structure. In the example system illustrated in FIG. 6B, the number of shift registers in an alignment unit is four. The switch nodes 684 in the data-input tree operate so that data is input into the shift registers in a round robin fashion with the first portion of a packet entering shift register 652; the next portion of the packet entering shift register 654; the next portion of the packet entering shift register 656; and the final portion of the packet entering shift register 658. Data does not simultaneously enter and exit a given shift register. When the shift register 652 is full, the first bit of the packet will be In cell 662 and, at the next step, packet bits begin shifting into the shift register 654. There is a control signal data path (not shown) from the top level of DV 630 to the module 650. If at a given DV input time T there is no blocking control signal, and there is a one in cell 662, then data will begin shifting from shift register 652 to DV 630. Shift register 654 is shorter than shift register 652. Shift register 654 can fill in the amount of time that it takes to drain shift register 652. Shift register 656 can fill in the amount of time that it takes to drain shift register 654. Shift register 658 can fill in the amount of time that it takes to drain shift register 656. Therefore, if there is a one in the cell 662, and the data is shifted out to DV, the entire packet will be successfully transferred from the chip input port to the Data Vortex™ switch module DV 630. In the embodiment pictured in FIG. 6B, the shift registers run at the speed of line 612 when data is shifting in and at the speed of line 618 when data is shifting out.

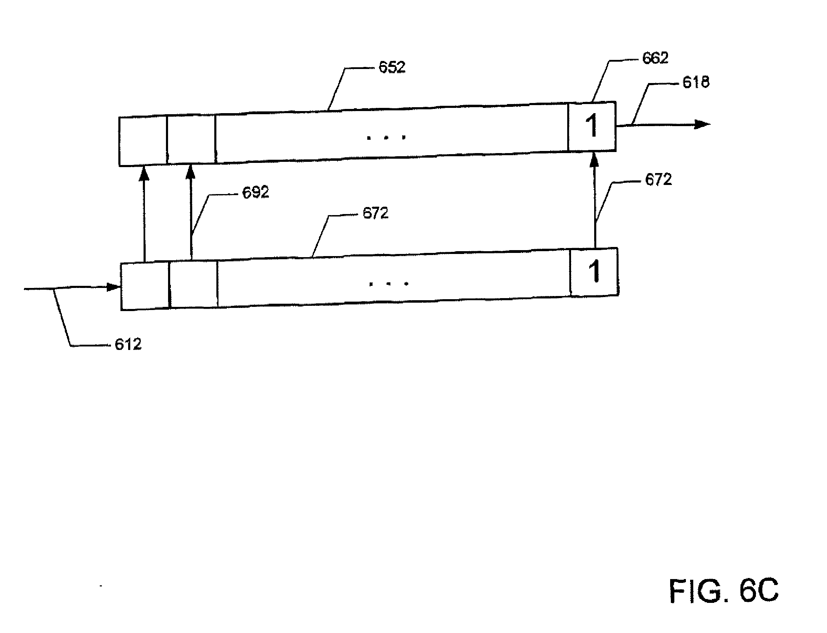

In an alternate embodiment pictured in FIG. 6C data traveling on line 612 is shifted into register 672 at the line 612 data rate. Data is shifted out of register 652 on line 618 at the line 618 data rate, where the data rate through line 612 is not necessarily equal to the data rate through line 618. When register 672 is full, it is transferred Into shift register 652 in a single clock tick via lines 692.

Refer to FIG. 7 illustrating a variable length FIFO that is suitable for use in the shift registers in the alignment units. This FIFO Is of similar construction to the FIFO illustrated in FIG. 2B. The FIFO is composed of two types of cells. A first type of cell with one data input port and one data output port is a one-bit shift register, A second type of cell (e.g., cells 701, 702, 704) is a switch cell with one data input port and two data output ports and acts as a one-bit shift register combined with a simple switch that can send its output to either one of two cells. The switch of a switch cell is set by a single bit sent to the switch by the length control unit LC 772. The LC unit receives a word W of payload length L, where L is the number of switch cells in variable length FIFO unit. LC sends the lowest order payload-bit of W to cell 701, the next bit to cell 702, the next bit to cell 704, and so forth.

Multiple Systems, each using a different packet length, can employ the same Data Vortex™ chip by setting the length of the Data Vortex™ FIFO and the lengths of the shift registers In FIG. 6B. These shift register lengths are controlled by input word W to the LC unit. If W has a lowest order payload-bit set to 0. then cell 701 sends data through line 740. If W has a lowest order payload-bit set to 0, then cell 701 sends data through line 705. Sending data through line 750 causes FIFO 730 to be shortened by one bit. Similarly, the sending of a one to cell 702 results In the shortening of the FIFO by two bits, and the sending of a one to cell 704 results In the shortening of the FIFO by four bits. In this way, the word W is the binary representation of an Integer l, where I is the number of bits that are deleted from the shift register 730. Thus, the utilization modules 730 advantageously enables the chip containing the Data Vortex™ to be used in systems that support various packet lengths.

## Claims

1. An interconnect structure comprising a collection of input ports IP, a collection of output ports OP, and
a switching element DV wherein data enters the DV switching element only at specific data entry times and further comprising;
a collection of synchronizing elements wherein:
data in the form of packets enter the input ports in an asynchronous fashion;
data packets pass from the input ports to the synchronizing units;
data exits the synchronizing units and enters the DV switching element with each packet arriving at the DV switching element at a specific data entry time.

2. An interconnect structure in accordance with claim 1, wherein the synchronizing unit contains a FIFO, wherein a first plurality of the cells of the FIFO are passive cells having only one output port;
a second plurality of the cells of the FIFO are active cells that have more than one output port including an output port OA and an output port OB with the amount of time that a message packet spends in the synchronizing unit is dependent on the setting of the active cells in the FIFO unit.

3. An interconnect structure in accordance with claim 2, wherein the active cells of the FIFO are set by a logic unit L.

4. An interconnect structure in accordance with claim 3, wherein the logic unit L receives an input from a dock and also receives input from a logic unit that records when a packet enters the network.

5. An interconnect structure in accordance with claim 1, wherein a given synchronizing unit contains a plurality of FIFO units including the FIFO unit F0, with a cell C wherein data from cell C passes directly into the switching element DV, and the first bit of a packet passes from cell C to the switching element DV only at a specific data entry time.

6. An interconnect structure in accordance with claim 5, wherein data shifts through said FIFO unit at the same data rate as data enters the DV switching element.

7. An interconnect structure in accordance with claim 6, wherein an entire packet containing a total of PN number of bits is transferred from a FIFO to the DV switching element in PN ticks of a clock that governs the data rate through the DV switching element.

8. An interconnect structure in accordance with claim 7. wherein a plurality of synchronization units and the switching element DV are on a chip and a data packet P enters the chip through a chip input port IP and is transferred through a serialization-de-serialization (SERDES) module and is transferred from the SERDES module to a synchronization unit and is transferred from the synchronization unit to the DV switching element and is passed from the DV switching element to an exit FIFO and is transferred from an exit FIFO to a SERDES module and is transferred from the SERDES module to a chip output port.

9. An interconnect structure In accordance with claim 1, wherein the DV switching element is a multiple level minimum logic network.

10. An Interconnect structure consisting of nodes and interconnect lines selectively coupling the nodes wherein the nodes are arranged in levels and angles and are of several types including:
a) logic nodes including the distinct logic nodes A, B, C, and X with the logic node A being capable of sending a packet P entering A to the logic node B or the logic node C with the sending of P to B or C being based In part on the header of B and also based in part on whether or not the node X sends a control signal to A and also including:
b) nodes arranged in a FIFO wherein a plurality of the cells of the FIFO are passive cells having only one output port and;
a plurality of the cells of the FIFO are active cells that have more than one output port including an output port OA and an output port OB and;
the amount of time that a message packet spends in the FIFO depends on the setting of the active cells in the FIFO unit.

11. An interconnect structure in accordance with claim 10, wherein the setting of the active nodes in the FIFO determines the length of the packets that are sent through the interconnect structure.
